# EUROPEAN PATENT APPLICATION

(11) **EP 4 756 728 A1**
(43) Date of publication of application: **10.06.2026**
(21) Application number: 25220788.1
(22) Date of filing: 04.12.2025
(51) Int. Cl.: G06V 10/25, G06V 20/62, G06V 30/10

(54) **SYSTEMS AND METHODS FOR RESOLVING LICENSE PLATE NUMBERS**

(30) Priority: 05.12.2024 US 202463728585 P; 03.12.2025 US 202519408159
(71) Applicant: Tyco Fire & Security GmbH, 8212 Neuhausen am Rheinfall (CH)
(72) Inventor: MARSHALL, George, Kinallen (GB); IRVINE, Christopher Raymond, Craigavon (GB); NEILL, Terence, Lisburn (GB); MCALEA, James, Ardglass (GB)
(74) Representative: Meissner Bolte Nürnberg

(57) **Abstract**

Example implementations include aspects for resolving license plate numbers read by a license plate recognition (LPR) sensor. A first indication of a license plate number read of a license plate on a first side of a vehicle and a second indication that at least a portion of the license plate is obstructed can be received. A corrected license plate number can be generated by at least one of combining the license plate number with a second license plate number read from a second side of the vehicle, or obtaining a stored license plate number from a license plate database at least in part by querying the license plate database based on the license plate number read from the license plate, and determining the stored license plate number associated with a registered vehicle having one or more stored physical properties matching one or more physical properties of the vehicle.

## Description

This patent application claims priority to Provisional Patent App. No. 63/728,585, filed December 5, 2024, and titled, "SYSTEMS AND METHODS FOR RESOLVING LICENSE PLATE NUMBERS," the contents of which are hereby incorporated by reference herein in their entireties.

The described aspects relate to license plate recognition, a computer-implemented method for resolving license plate numbers read by a license plate recognition (LPR) sensor, an apparatus for resolving license plate numbers and a computer-readable medium storing instructions for resolving license plate numbers read by a LPR sensor.

License plate recognition sensors exist for detecting license plates on vehicles and reading the alphanumeric characters on the license plate. LPR sensors can be, or include, or otherwise employ, one or more cameras to capture an image of a license plate, and/or can perform optical character recognition (OCR) to read the characters in the image. An LPR sensor can notify a software driver, or another device, of the license plate read, including the characters discerned from the image. An LPR sensor can be coupled to a computing device and/or can communicate license plate reads to the software driver executing on the computing device. The LPR sensor can couple to the computing device via a wired or wireless communications interface, such as a communications port (e.g., a serial port, universal serial bus (USB) port, a Bluetooth connection, etc.).

Commercial or residential buildings can include parking areas, such as parking lots or parking garages, which can utilize LPR sensors to read and/or store (e.g., in a log) license plate information (e.g., license plate numbers, state identifiers, county identifiers, expiration dates, etc.) from the license plates of vehicles entering and/or exiting the parking areas. The logs of license plate information can be analyzed after the fact by various personnel or systems for various purposes. In one example, security personnel can analyze the logs for investigations involving vehicles that entered or exited the parking areas at certain times.

The following presents a simplified summary of one or more aspects in order to provide a basic understanding of such aspects. This summary is not an extensive overview of all contemplated aspects, and is intended to neither identify key or critical elements of all aspects nor delineate the scope of any or all aspects. Its sole purpose is to present some concepts of one or more aspects in a simplified form as a prelude to the more detailed description that is presented later. Embodiments according to the invention are disclosed in particular in the appended claims.

According to an aspect, a computer-implemented method for resolving license plate numbers read by a license plate recognition (LPR) sensor is provided that includes receiving a first indication of a license plate number read of a license plate on a first side of a vehicle and a second indication that at least a portion of the license plate is obstructed, based on the second indication, generating a corrected license plate number by at least one of: combining the license plate number with a second license plate number read from a second side of the vehicle; or obtaining a stored license plate number from a license plate database at least in part by querying the license plate database based on the license plate number read from the license plate, and determining the stored license plate number associated with a registered vehicle having one or more stored physical properties matching one or more physical properties of the vehicle, and providing an output of the corrected license plate number.

In another aspect, an apparatus for resolving license plate numbers read by a LPR sensor is provided including one or more memories; and one or more processors communicatively coupled with the one or more memories and configured to perform one or more methods described herein. In another aspect, a computer-readable medium is provided herein that stores computer executable instructions for performing one or more methods described herein.

To the accomplishment of the foregoing and related ends, the one or more aspects comprise the features hereinafter fully described and particularly pointed out in the claims. The following description and the annexed drawings set forth in detail certain illustrative features of the one or more aspects. These features are indicative, however, of but a few of the various ways in which the principles of various aspects may be employed, and this description is intended to include all such aspects and their equivalents.

### BRIEF DESCRIPTION OF THE DRAWINGS

The accompanying drawings, which are incorporated into and constitute a part of this specification, illustrate one or more example aspects of the present disclosure and, together with the detailed description, serve to explain their principles and implementations.
Fig. 1 is a diagram of an example of a computing device for reading license plate numbers from vehicles using one or more images from one or more cameras, in accordance with aspects described herein.
Fig. 2 is a flowchart illustrating a method for generated corrected license plate numbers, in accordance aspects described herein.
Fig. 3 illustrates an example of a call flow between a computing device, a first LPR sensor/camera and a second LPR sensor/camera, in accordance with aspects described herein.
Fig. 4 illustrates an example of a call flow between a computing device, a first LPR sensor/camera and/or a license plate database, in accordance with aspects described herein.
Fig. 5 is a block diagram of examples components of a computer device that may implement one or more of the features of the building management system of Fig. 1.

### DETAILED DESCRIPTION

The detailed description set forth below in connection with the appended drawings is intended as a description of various configurations and is not intended to represent the only configurations in which the concepts described herein may be practiced. The detailed description includes specific details for the purpose of providing a thorough understanding of various concepts. However, it will be apparent to those skilled in the art that these concepts may be practiced without these specific details. In some instances, well known components may be shown in block diagram form in order to avoid obscuring such concepts.

Aspects described herein relate to resolving characters of a license plate read by a license plate recognition (LPR) sensor where the license plate may be at least partially obstructed such to prevent reliable character recognition for one or more characters of the license plate by the LPR sensor. In an example, where one or more characters of the license plate are obstructed or otherwise obscured, a second license plate of the vehicle can be read (e.g., by another LPR sensor or camera), and the resulting recognized characters of the second license plate read can be combined with the characters from the first license plate read to generate a corrected license plate number.

In another example, where one or more characters of the license plate are obstructed or otherwise obscured, a license plate database can be queried to resolve the corrected license plate number. For example, a list of possible license plate numbers can be generated based on the obscured character(s), and the license plate database can be queried to determine a list of one or more existing license plate numbers. In one example, the list of one or more license plate numbers can include one or more physical properties of the vehicle associated with the license plate number, such as color, make, model, etc. of the vehicle. In this example, one or more physical properties of the vehicle from which the license plate number is read can be determined and notified by the LPR sensor or a different camera during or at a similar time to the license plate read, and the one or more physical properties of this vehicle can be compared to the one or more physical properties of the vehicles in the list of license plate numbers to determine the corrected license plate number as a license plate number in the list that corresponds to similar physical properties of the associated vehicle.

In either case, for example, the corrected license plate number can be output to another device or system to notify of a corrected license plate number read, and/or otherwise determined, from a vehicle captured by the LPR sensor. Using the combined read characters and/or leveraging the license plate database, in this regard, can allow for providing correct license plate numbers being read by the LPR sensor even when the license plate number is partially obstructed or otherwise obscured. In an example, correcting of the license plate number can be performed at the LPR sensor or an associated edge server to localize the functionality and/or can be performed in real time. In one example, the license plate number read from the vehicle can be verified by querying the license plate database even if not obscured. In one example, if the license plate number does not match the determined one or more physical properties of the vehicle, the license plate database can be queried for similar license plate numbers that may be associated with the one or more physical properties of the vehicle, and the read license plate number can be replaced with the corrected license plate number from the list, and/or an alert can be generated to indicate possible tampering with the license plate. The functionality described herein, for example, can mitigate criminals intentionally obstructing plates and/or can prevent the use of cloned plates.

Turning now to the figures, example aspects are depicted with reference to one or more modules or components described herein, where modules or components in dashed lines may be optional.

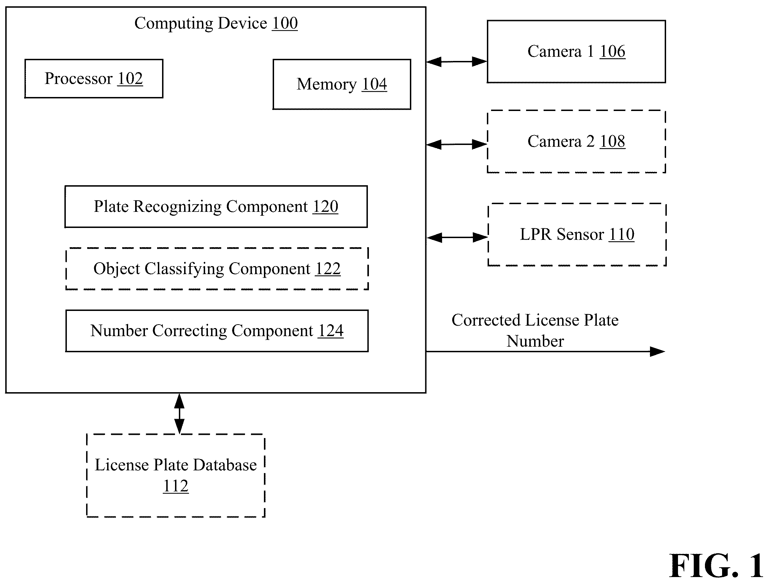

Fig. 1 is a diagram of an example of a computing device 100 for reading license plate numbers from vehicles using one or more images from one or more cameras, in accordance with aspects described herein. For example, computing device 100 can include a processor 102 (and/or multiple processors) and/or a memory 104 (or multiple memories) configured to execute or store instructions or other parameters related to performing one or more processes, such as reading license plate numbers, generated corrected license plate numbers for partially obscured license plates, etc. For example, one or more processors 102 and one or more memories 104 may be separate components communicatively coupled by a bus (e.g., on a motherboard or other portion of a computing device, on an integrated circuit, such as a system on a chip (SoC), etc.), components integrated within one another (e.g., one or more processors 102 can include the one or more memories 104 as an on-board component), and/or the like. One or more memories 104 may store instructions, parameters, data structures, etc. for use/execution by one or more processors 102 to perform functions described herein. In addition, for example, computing device 100 can include multiple computing devices distributed across a network (e.g., in a network or cloud-based deployment), where each of the computing devices can perform one or more functions described herein.

In one example, the computing device 100 can be, can be part of, or can otherwise include or communicatively coupled with a LPR sensor configured for capturing one or more images of license plate numbers, recognizing characters of the license plate from the one or more images, generating corrected license plate numbers, as described herein, etc. For example, computing device 100 can include, or can be communicatively coupled with, a camera 1 106, such as a red, green, blue (RGB) camera, or other type of camera that can capture an image of a license plate of a vehicle. For example, the camera 1 106 can be positioned to capture the image of the license plate as the vehicle enters an area. In an example, computing device 100 can also optionally include or be communicatively coupled with another camera, camera 2 108, for capturing a different license plate of the vehicle. For example, camera 1 106 can be positioned to capture a license plate at a front of the vehicle, and camera 2 108 can be positioned to capture a license plate at a rear of the vehicle. In another example, computing device 100 can optionally be communicatively coupled to a separate LPR sensor 110 that can read and provide an indication of the license plate number of a different license plate of the vehicle to the computing device 100 (e.g., as a string of characters).

In an example, computing device 100 may also optionally be communicatively coupled (e.g., via one or more networks, such as the Internet) with a license plate database 112 that stores license plate numbers registered to vehicles along with one or more physical properties of the vehicles. For example, the license plate database 112 can be region-specific, and/or may be managed by a municipality or associated government entity based on vehicle registrations granted to vehicles within the municipality. In any case, for example, the license plate database 112 can include license plate numbers and/or physical properties associated with the vehicle registered to the license plate numbers, such as color, make, model, etc.

In an example, the computing device 100 can include one or more components, which can be provided by instructions stored in the memory/memories 104 and/or executed by the one or more processors 102 to provide functionality described herein. For example, computing device 100 can include a plate recognizing component 120 for determining a license plate number based at least in part on performing character recognition (e.g., optical character recognition (OCR) or other recognition, such as artificial intelligence (AI)-based recognition, image comparison, etc.) on one or more images of the license plate obtained from camera 1 106. In an example, computing device 100 can also optionally include an object classifying component 122 for classifying one or more properties of the vehicle (e.g., based on the image obtained from camera 1 106, based on performing an AI-based classification process on the vehicle as identified in the image to determine the one or more properties, etc.). In an example, computing device 100 can also include a number correcting component 124 for correcting a license plate number where the license plate number in the image is partially obscured (e.g., by an object that is deliberately or non-deliberately placed over one or more characters of the license plate number). In an example, the computing device 100 can output the corrected license plate number to one or more systems or devices.

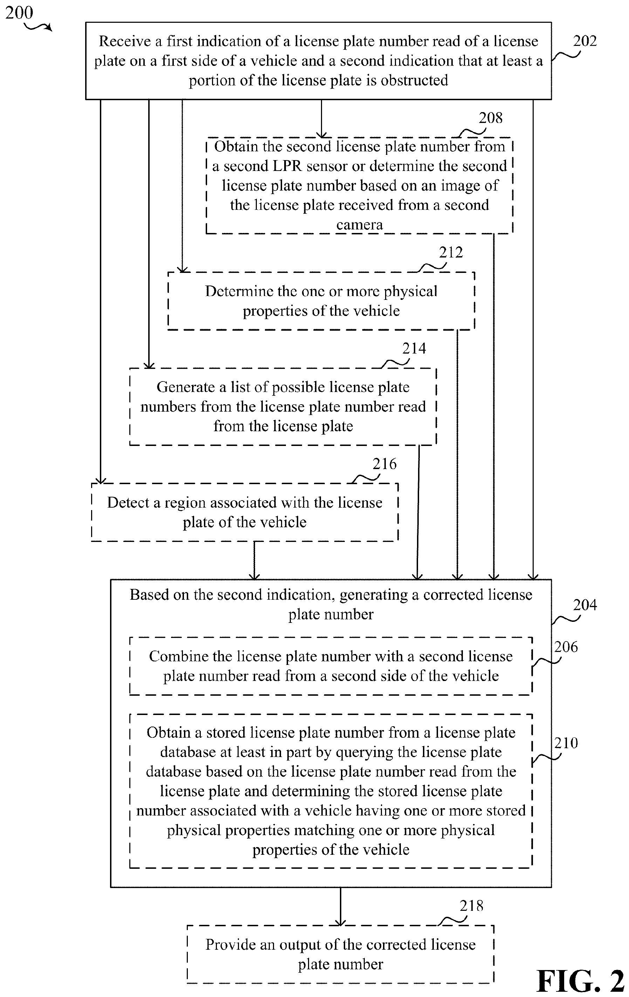

Fig. 2 illustrates an example of a method 200 for generating corrected license plate numbers, in accordance with aspects described herein. In an example, in operation, computing device 100 may perform method 200 such as via execution of certain instructions by one or more processors 102 and/or memory/memories 104, which may execute or implement components of the computing device 100, as described above.

In an example, in method 200, at action 202, a first indication of a license plate number read of a license plate on a first side of a vehicle and a second indication that at least a portion of the license plate is obstructed can be received. For example, plate recognizing component 120, e.g., in conjunction with computing device 100, one or more processors 102, memory/memories 104, camera 1 106, LPR sensor 110, etc., can receive the first indication of the license plate number read of the license plate on the first side of the vehicle and the second indication that at least the portion of the license plate is obstructed. In one example, camera 1 106 can be a LPR sensor that can read and provide the first indication (e.g., as a string of characters) and the second indication (based on a determination by the LPR sensor) to the computing device 100.

In another example, computing device 100 can include functionality of an LPR sensor such that plate recognizing component 120 attempt to read the license plate number from one or more images from the camera 1 106, and can generate the first indication and the second indication. In any case, whether performed by the plate recognizing component 120 or a separate LPR sensor that is communicatively coupled with the computing device 100, for example, the second indication that at least a portion of the license plate is obstructed can be generated based on one or more of detecting an object in the image that intersects the license plate, detecting one or more characters of the license plate (e.g., via OCR or AI-based recognition) with a confidence level of identification that is below a threshold, or detecting an unexpected spacing between the one or more characters being detected (e.g., via OCR or AI-based recognition) on the license plate, etc.

In an example, in method 200, at action 204, a corrected license plate number can be generated based on the second indication. For example, number correcting component 124, e.g., in conjunction with computing device 100, one or more processors 102, memory/memories 104, etc., can, based on the second indication, generate a corrected license plate number. In an example, number correcting component 124 can provide the corrected license plate number as output to another system or device that is receiving license plate read events, as output to a log file, etc.

In one example, in generating the corrected license plate number at action 204, optionally at action 206, the license plate number can be combined with a second license plate number read from a second side of the vehicle. For example, number correcting component 124, e.g., in conjunction with computing device 100, one or more processors 102, memory/memories 104, etc., can combine the license plate number read from the first side of the vehicle (e.g., a rear of the vehicle) with a second license plate read form a second side of the vehicle (e.g., a front of the vehicle). In this example, optionally at action 208, the second license plate number can be obtained from a second LPR sensor or determined based on an image of the license plate received from a second camera. For example, plate recognizing component 120, e.g., in conjunction with computing device 100, one or more processors 102, memory/memories 104, camera 2 108, LPR sensor 110, etc., can obtain the second license plate number from a second LPR sensor (e.g., as a string of characters from the second LPR sensor) or can determine the second license plate number based on an image of the license plate received from a second camera (e.g., camera 2 108). As described, the second LPR sensor or second camera can be positioned differently than the LPR sensor 110 or first camera (e.g., camera 1 106) to capture the license plate on the second side of the vehicle. In one example, the first camera (or first LPR sensor) and the second camera (or second LPR sensor) can be positioned at a similar area to capture the images of the license plates at similar moments in time.

In an example, number correcting component 124 can combine the license plate numbers read and recognized from the images of the different sides of the vehicle to resolve any characters that may be obstructed from the images. For example, where plate recognizing component 120 determines (e.g., based on the received or generated second indication) that one or more characters of the license plate is obscured, plate recognizing component 120 can obtain the second image from the other camera (or LPR sensor) to obtain a different license plate read that may include the obscured character(s). In this example, number correcting component 124 can replace the license plate number read from the first image with the license plate number read from the second image (e.g., where no obstruction is detected in the second image). In another example, number correcting component 124 can replace the obscured character(s) of the license plate number read from the first image with characters from the license plate number read from the second image that are in the same position(s) in the corresponding strings of characters.

In one example, in generating the corrected license plate number at action 204, optionally at action 210, a stored license plate number can be obtained from a license plate database at least in part by querying the license plate database based on the license plate number read from the license plate and determining the stored license plate number associated with a registered vehicle having one or more stored physical properties matching one or more physical properties of the vehicle. For example, number correcting component 124, e.g., in conjunction with computing device 100, one or more processors 102, memory/memories 104, etc., can obtain the stored license plate number from the license plate database (e.g., license plate database 112) at least in part by querying the license plate database based on the license plate number read from the license plate and determining the stored license plate number associated with the registered vehicle having one or more stored physical properties matching one or more physical properties of the vehicle.

In one example, in method 200, optionally at action 212, the one or more physical properties of the vehicle can be determined. For example, object classifying component 122, e.g., in conjunction with computing device 100, one or more processors 102, memory/memories 104, etc., can determine the one or more physical properties of the vehicle. In an example, object classifying component 122 can determine the one or more physical properties of the vehicle from the image received from camera 1 106, from information received from an LPR sensor, and/or the like. For example, the one or more physical properties may include a color, make, model, etc., of the vehicle, which may be determined using AI-based object detection from one or more images of the vehicle. In an example, number correcting component 124 can use the license plate number read from the first image along with the one or more physical properties of the vehicle to resolve the corrected license plate number. In one example, number correcting component 124 can query the license plate database 112 specifying the license plate number as read from the image (e.g., at least the characters being read with a threshold confidence) and the one or more properties of the vehicle to obtain an output of a corrected license plate number that matches the partial number and one or more properties. In another example, number correcting component 124 can receive, from the license plate database, a list of registered vehicles having a registered license plate number that matches at least a portion of characters of the license plate number from the vehicle, as determined or received by plate recognizing component 120, and can determine one of the registered vehicles that has one or more physical properties indicated in the license plate database that match the one or more physical properties of the vehicle as classified by object classifying component 122.

In one example, number correcting component 124 can query the license plate database using a wildcard character in place of the one or more obstructed characters to obtain the list of registered vehicles. In another example, number correcting component 124 can determine, for each obscured character, a subset of characters that may match the obscured character, and can query the license plate database based on license plate numbers having each of the subset of characters substituted for the obscured character. Thus, in an example, in method 200, optionally at action 214, a list of possible license plate numbers can be generated from the license plate number relate from the license plate. For example, number correcting component 124, e.g., in conjunction with computing device 100, one or more processors 102, memory/memories 104, etc., can generate the list of possible license plate numbers from the license plate number read from the license plate. In this example, number correcting component 124 can generate the list of possible license plate numbers to include substituted characters for one or more obscured characters, a wildcard character, etc. Number correcting component 124 can query the license plate database based on the list of possible license plate numbers to obtain a list of one or more registered vehicles that have a license plate number indicated in the list of possible license plate numbers. As described, for example, number correcting component 124 can determine a registered vehicle from the list that has one or more common physical properties as the vehicle detected in the image, and can return the license plate number of the registered vehicle as the corrected license plate number.

In one example, in method 200, optionally at action 216, a region associated with the license plate of the vehicle can be detected. For example, plate recognizing component 120, e.g., in conjunction with computing device 100, one or more processors 102, memory/memories 104, camera 1 106, etc., can detect the region associated with the license plate of the vehicle. For example, plate recognizing component 120 can detect a region indicated on the license plate, based on performing OCR or AI-based recognition or based on receiving the information from a separate LPR sensor, such as a country or state indicated on the license plate, a county or city indicated on the license plate, etc. In an example, number correcting component 124 can use the region or regions in selecting or querying the license plate database 112. For example, number correcting component 124 may specify the region in the query to return license plates that match the corresponding region of the vehicle. In another example, various license plate databases may be available per region, and number correcting component 124 can utilize the region to select the license plate database, a table in the license plate database, etc. In one example, number correcting component 124 can detect a country or state of the license plate, and can accordingly select a country-specific or state-specific license plate database or portion of the database for querying. In another example, number correcting component 124 can additionally or alternatively detect a county or city of the license plate, and can accordingly query the license plate database specifying the county or city to limit the resulting registered license plates for comparison.

In one example, in method 200, optionally at action 218, an output of the corrected license plate number can be provided. For example, number correcting component 124, e.g., in conjunction with computing device 100, one or more processors 102, memory/memories 104, camera 1 106, etc., can provide an output of the corrected license plate number to one or more devices or systems to which the computing device 100 is communicatively coupled to indicate a read of a license plate. Thus, for example, the computing device 100 can perform the number correcting before the license plate number is provided to an external device or system or output to a log, etc. In this regard, for example, the computing device 100 can be an intermediate or edge device that communicates directly with cameras or LPR sensors to correct license plate numbers having missing or obscured characters, as described above.

In some examples described herein, existing technology can be used to get a partial reading of both number plates. The front and back can be compared if the full number can be computed (e.g., first number on one plate is obscured and last on the other the number plate can be made by combining them). If the same number is obscured front and back, for example, a list of possible characters can be generated. Existing technology can be used to get car make and model using vision AI. Databases can be used to match make and model to potential generated plates. If there are multiple matches, each can be returned for verification.

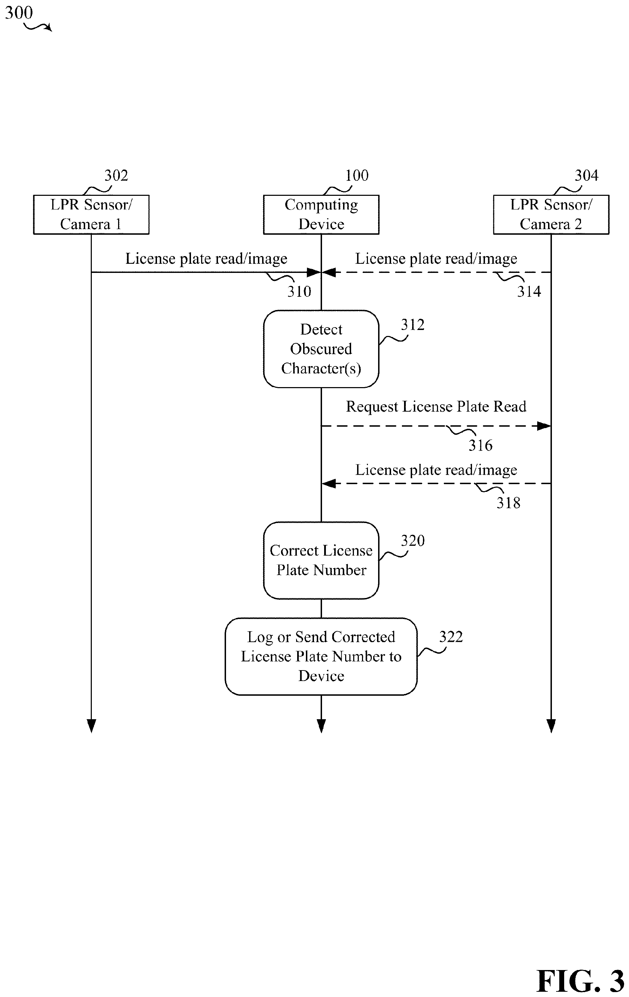

Fig. 3 illustrates an example of a call flow 300 between a computing device 100, a first LPR sensor/camera and a second LPR sensor/camera, in accordance with aspects described herein. In an example, the first LPR sensor/camera can include LPR sensor 110, camera 1 106, and/or the like, and/or the second LPR sensor/camera can include a second LPR sensor (e.g., other than LPR sensor 110), camera 2 108, and/or the like, as described herein. At 310, the computing device 100 can receive a license plate read or an associated image from the LPR sensor/camera 1 302. In one example, sending of the license plate read or image can occur based on LPR sensor/camera 1 302 capturing the license plate read (e.g., capturing an image of the license plate and recognizing one or more characters on the license plate) or image. In an example, the license plate read received by the computing device 100 can be an event indicating a license plate read and one or more characters of the license plate recognized (e.g., using OCR or other recognition technique(s)) by the LPR sensor/camera 1 302. At 312, the computing device 100 can detect one or more obscured characters in the license plate number. In one example, computing device 100 can receive an indication of the obstructed character from LPR sensor/camera 1 302. For example, the second indication can be a special character in one or more character positions of the license plate number indicating that the license plate is obstructed at the one or more character positions. In another example, the computing device 100 can detect one or more obscured characters in the license plate number indicated in the license plate read or based on computing device 100 performing character recognition on the image, based on computing device 100 detecting the license plate as intersected by another object in the image, etc., as described herein.

Based on detecting the obscured character(s), computing device 100 can obtain another license plate read or image from LPR sensor/camera 2 304. In one example, at 314, computing device 100 can optionally receive the license plate read/image from LPR sensor/camera 2 304 at the same, or similar, time as, at 310, receiving the license plate read/image from LPR sensor/camera 1 302. In another example, at 316, computing device 100 can optionally request the license plate read from LPR sensor/camera 2 304 (e.g., based on detecting the obscured characters at 312), and at 318, computing device 100 can receive the license plate read/image from LPR sensor/camera 2 304. In any case, at 320, computing device 100 can correct the license plate number. For example, as described, computing device 100 can replace one or more of the obscured characters with one or more characters from the license plate read/image from LPR sensor/camera 2 304. In an example, at 322, computing device 100 can log or send corrected license plate number to a device. As described, for example, computing device 100 can store the corrected license plate number in a log of other license plate numbers and/or can communicate the corrected number to another device as output, as described herein.

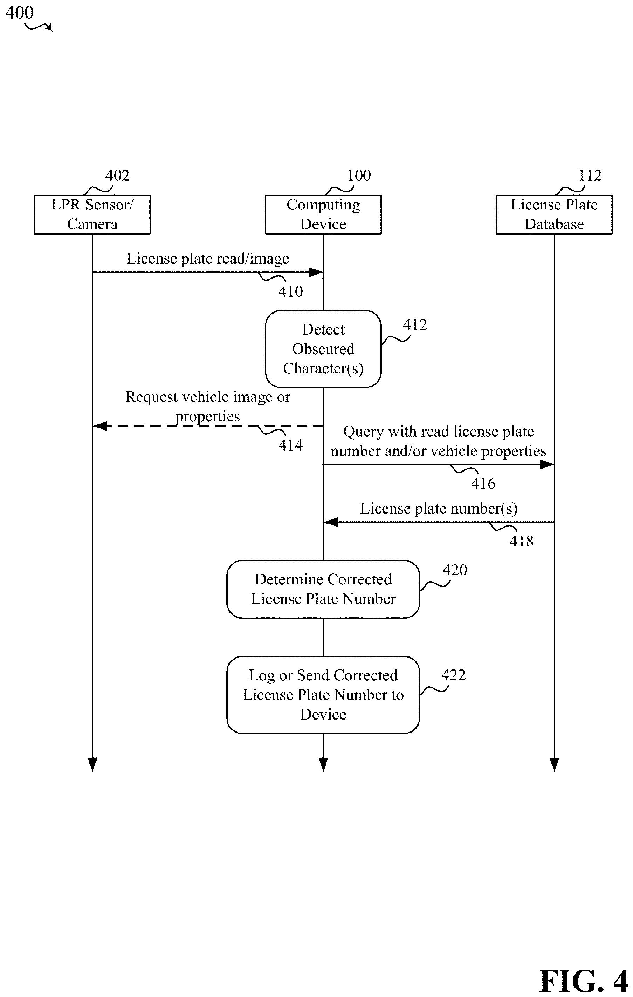

Fig. 4 illustrates an example of a call flow 400 between a computing device 100, a first LPR sensor/camera and/or a license plate database 112, in accordance with aspects described herein. In an example, the first LPR sensor/camera can include LPR sensor 110, camera 1 106, and/or the like, as described herein. At 410, the computing device 100 can receive a license plate read or an associated image from the LPR sensor/camera 402. In one example, sending of the license plate read or image can occur based on LPR sensor/camera 402 capturing the license plate read (e.g., capturing an image of the license plate and recognizing one or more characters on the license plate) or image. In an example, the license plate read received by the computing device 100 can be an event indicating a license plate read and one or more characters of the license plate recognized (e.g., using OCR or other recognition technique(s)) by the LPR sensor/camera 402. At 412, the computing device 100 can detect one or more obscured characters in the license plate number. In one example, computing device 100 can receive an indication of the obstructed character from LPR sensor/camera 402. For example, the second indication can be a special character in one or more character positions of the license plate number indicating that the license plate is obstructed at the one or more character positions. In another example, the computing device 100 can detect one or more obscured characters in the license plate number indicated in the license plate read or based on computing device 100 performing character recognition on the image, based on computing device 100 detecting the license plate as intersected by another object in the image, etc. as described herein.

Based on detecting the obscured character(s), at 414, computing device 100 can optionally request a vehicle image or an indication of one or more properties from the LPR sensor/camera 402 or from another LPR sensor/camera that obtains an image of the vehicle at the same or similar time as LPR sensor/camera 402. For example, the one or more properties can include a make, model, trim, color, etc. of the vehicle, and can be obtained from the image (e.g., by the LPR sensor/camera 402 or by the computing device 100) using AI-based object identification or similar technologies to isolate the vehicle and/or determine color based on pixel color, determine model or trim based on comparing the isolated vehicle image to a database of vehicle images, etc.

In one example, at 416, computing device 100 can transmit, to the license plate database 112, a query with the read license plate number (or portion thereof, e.g., and/or including one or more wildcard characters, or multiple possible license plate numbers, etc.) and/or the one or more vehicle properties. In one example, querying the license plate database 112 can include querying the license plate database for stored license plate numbers having any character in the one or more character positions. In another example, querying the license plate database can include querying the license plate database for stored license plate numbers that at least partially match the license plate number read from the license plate. In an example, at 418, the license plate database 112 can return, to the computing device 100, one or more license plate numbers. For example, where the query includes the vehicle properties, license plate database 112 may have a single entry of an actual license plate number that matches the portion of the license plate number (or multiple license plate numbers) included in the query. In another example, where the query does not include the vehicle properties, license plate database 112 may return multiple license plate numbers along with one or more vehicle properties for each license plate number.

In an example, at 420, computing device 100 can determine the correct license plate number. For example, where multiple license plate numbers and corresponding one or more vehicle properties are received at 418, computing device 100 can determine which corresponding one or more vehicle properties match the one or more vehicle properties determined of the vehicle from the image. In an example, at 422, computing device 100 can log or send corrected license plate number to a device. As described, for example, computing device 100 can store the corrected license plate number in a log of other license plate numbers and/or can communicate the corrected number to another device as output, as described herein.

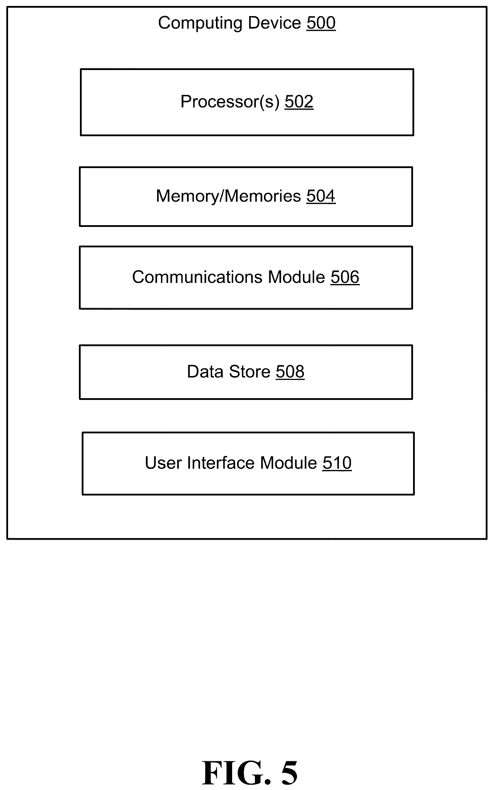

Referring to Fig. 5, a computing device 500 may implement all or a portion of the functionality described in Fig. 1-2, in accordance with aspects described herein. For example, the computing device 500 may be or may include at least a portion of the computing device 100, or any other module or component described herein with reference to Figs. 1-2. The computing device 500 may include one or more processors 502 which may be configured to execute or implement software, hardware, and/or firmware modules that perform some or all of the functionality described herein with reference to Figs. 1-2. For example, the processor(s) 502 may be configured to execute or implement software, hardware, and/or firmware modules that perform some or all of the functionality described herein with reference to the computing device 100, or any other module or component described herein with reference to Figs. 1-2.

The processor(s) 502 may be a micro-controller, an application-specific integrated circuit (ASIC), or a field-programmable gate array (FPGA), and/or may include a single or multiple set of processors or multi-core processors. Moreover, the processor(s) 502 may be implemented as an integrated processing system and/or a distributed processing system. The computing device 500 may further include memory/memories 504, such as for storing local versions of applications being executed by the processor(s) 502, related instructions, parameters, etc. The memory/memories 504 may include a type of memory usable by a computer, such as random access memory (RAM), read only memory (ROM), tapes, magnetic discs, optical discs, volatile memory, non-volatile memory, and any combination thereof. Additionally, the processor(s) 502 and the memory/memories 504 may include and execute an operating system executing on the processor(s) 502, one or more applications, display drivers, etc., and/or other modules or components of the computing device 500.

Further, the computing device 500 may include a communications module 506 that provides for establishing and maintaining communications with one or more other devices, parties, entities, etc. utilizing hardware, software, and services. The communications module 506 may carry communications between modules on the computing device 500, as well as between the computing device 500 and external devices, such as devices located across a communications network and/or devices serially or locally connected to the computing device 500. In an aspect, for example, the communications module 506 may include one or more buses, and may further include transmit chain modules and receive chain modules associated with a wireless or wired transmitter and receiver, respectively, operable for interfacing with external devices.

Additionally, the computing device 500 may include a data store 508, which can be any suitable combination of hardware and/or software, that provides for mass storage of information, databases, and programs. For example, the data store 508 may be or may include a data repository for applications and/or related parameters not currently being executed by processor(s) 502. In addition, the data store 508 may be a data repository for an operating system, application, display driver, etc., executing on the processor 502, and/or one or more other modules of the computing device 500.

The computing device 500 may also include a user interface module 510 operable to receive inputs from a user of the computing device 500 and further operable to generate outputs for presentation to the user (e.g., via a display interface to a display device). The user interface module 510 may include one or more input devices, including but not limited to a keyboard, a number pad, a mouse, a touch-sensitive display, a navigation key, a function key, a microphone, a voice recognition module, or any other mechanism capable of receiving an input from a user, or any combination thereof. Further, the user interface module 510 may include one or more output devices, including but not limited to a display interface, a speaker, a haptic feedback mechanism, a printer, any other mechanism capable of presenting an output to a user, or any combination thereof.

Some further example aspects are provided below. Any of these aspects (or: embodiments) can be claimed in a separate claim, e.g. by substituting the word "Aspect" by "Claim", in particular in the order as mentioned below and/or in any combination with any embodiment described above or with any of the features of the attached claims.

Aspect 1 is a method for resolving license plate numbers read by a license plate recognition (LPR) sensor including (or: comprising) receiving a first indication of a license plate number read of a license plate on a first side of a vehicle and a second indication that at least a portion of the license plate is obstructed, based on the second indication, generating a corrected license plate number by at least one of combining the license plate number with a second license plate number read from a second side of the vehicle, or obtaining a stored license plate number from a license plate database at least in part by querying the license plate database based on the license plate number read from the license plate, and determining the stored license plate number associated with a registered vehicle having one or more stored physical properties matching one or more physical properties of the vehicle, and providing an output of the corrected license plate number.

In Aspect 2, the method of Aspect 1 includes (or: comprises) where the second indication includes a special character in one or more character positions of the license plate number indicating that the license plate is obstructed at the one or more character positions.

In Aspect 3, the method of Aspect 2 includes (or: comprises) where combining the license plate number with the second license plate number includes substituting the one or more character positions with one or more second characters in corresponding character positions of the second license plate number.

In Aspect 4, the method of any of Aspects 2 or 3 includes (or: comprises) where querying the license plate database includes querying the license plate database for stored license plate numbers having any character in the one or more character positions.

In Aspect 5, the method of any of Aspects 1 to 4 includes (or: comprises) where combining the license plate number with the second license plate number includes substituting one or more first characters in the license plate number identified as obstructed with one or more second characters in the second license plate number.

In Aspect 6, the method of any of Aspects 1 to 5 includes (or: comprises) where querying the license plate database includes querying the license plate database for stored license plate numbers that at least partially match the license plate number read from the license plate.

In Aspect 7, the method of any of Aspects 1 to 6 includes (or: comprises) generating a list of possible license plate numbers from the license plate number read from the license plate, where querying the license plate database includes querying the license plate database for stored license plate numbers based on the list of possible license plate numbers.

In Aspect 8, the method of any of Aspects 1 to 7 includes (or: comprises) determining the one or more physical properties of the vehicle as one or more of a color of the vehicle, a make of the vehicle, or a model of the vehicle.

In Aspect 9, the method of any of Aspects 1 to 8 includes (or: comprises) detecting a region associated with the license plate of the vehicle, where querying the license plate database is further based on the region.

In Aspect 10, the method of any of Aspects 1 to 9 includes (or: comprises) detecting that the portion of the license plate is obstructed based on a spacing between recognized characters on the license plate.

In Aspect 11, the method of any of Aspects 1 to 10 includes (or: comprises) where the second license plate number is read by a second LPR sensor.

Aspect 12 is an apparatus including (or: comprising) one or more processors, one or more memories (communicatively) coupled with the one or more processors, and instructions stored in the one or more memories and operable, when executed by the one or more processors, to cause the apparatus to perform any of the methods of Aspects 1 to 11.

Aspect 13 is an apparatus for including means for performing any of the methods of Aspects 1 to 11.

Aspect 14 is one or more computer-readable media (or: medium) including code executable by one or more processors, the code including code for performing any of the methods of Aspects 1 to 11.

Aspect 15. A computer-implemented method for resolving license plate numbers read by a license plate recognition (LPR) sensor, comprising:
receiving a first indication of a license plate number read of a license plate on a first side of a vehicle and a second indication that at least a portion of the license plate is obstructed;
based on the second indication, generating a corrected license plate number by at least one of:
   combining the license plate number with a second license plate number read from a second side of the vehicle; or
   obtaining a stored license plate number from a license plate database at least in part by querying the license plate database based on the license plate number read from the license plate, and determining the stored license plate number associated with a registered vehicle having one or more stored physical properties matching one or more physical properties of the vehicle; and
   providing an output of the corrected license plate number.

Aspect 16. The computer-implemented method of aspect 15, wherein the second indication includes a special character in one or more character positions of the license plate number indicating that the license plate is obstructed at the one or more character positions.

Aspect 17. The computer-implemented method of aspect 16, wherein combining the license plate number with the second license plate number includes substituting the one or more character positions with one or more second characters in corresponding character positions of the second license plate number.

Aspect 18. The computer-implemented method of aspect 16 or 17, wherein querying the license plate database includes querying the license plate database for stored license plate numbers having any character in the one or more character positions.

Aspect 19. The computer-implemented method of any of aspects 15 to 18, wherein combining the license plate number with the second license plate number includes substituting one or more first characters in the license plate number identified as obstructed with one or more second characters in the second license plate number.

Aspect 20. The computer-implemented method of any of aspects 15 to 19, wherein querying the license plate database includes querying the license plate database for stored license plate numbers that at least partially match the license plate number read from the license plate.

Aspect 21. The computer-implemented method of any of aspects 15 to 20, further comprising generating a list of possible license plate numbers from the license plate number read from the license plate, wherein querying the license plate database includes querying the license plate database for stored license plate numbers based on the list of possible license plate numbers.

Aspect 22. The computer-implemented method of any of aspects 15 to 21, further comprising determining the one or more physical properties of the vehicle as one or more of a color of the vehicle, a make of the vehicle, or a model of the vehicle.

Aspect 23. The computer-implemented method of any of aspects 15 to 22, further comprising detecting a region associated with the license plate of the vehicle, wherein querying the license plate database is further based on the region.

Aspect 24. The computer-implemented method of any of aspects 15 to 23, further comprising detecting that the portion of the license plate is obstructed based on a spacing between recognized characters on the license plate.

Aspect 25. The computer-implemented method of any of aspects 15 to 24, wherein the second license plate number is read by a second LPR sensor.

Aspect 26. An apparatus for resolving license plate numbers, comprising:
one or more memories; and
one or more processors communicatively coupled with the one or more memories and configured to:
   receive, from a license plate recognition (LPR) sensor, a first indication of a license plate number read of a license plate on a first side of a vehicle and a second indication that at least a portion of the license plate is obstructed;
   based on the second indication, generating a corrected license plate number by at least one of:
      combine the license plate number with a second license plate number read, by a second LPR sensor, from a second side of the vehicle; or
      obtain a stored license plate number from a license plate database at least in part by querying the license plate database based on the license plate number read from the license plate, and determining the stored license plate number associated with a vehicle having one or more stored physical properties matching one or more physical properties of the vehicle obtained by the LPR sensor; and
      provide an output of the corrected license plate number.

Aspect 27. The apparatus of aspect 26, wherein the second indication includes a special character in one or more character positions of the license plate number indicating that the license plate is obstructed at the one or more character positions.

Aspect 28. The apparatus of aspect 27, wherein the one or more processors are configured to combine the license plate number with the second license plate number at least in part by substituting the one or more character positions with one or more second characters in corresponding character positions of the second license plate number.

Aspect 29. The apparatus of aspect 27 or 28, wherein the one or more processors are configured to query the license plate database for stored license plate numbers having any character in the one or more character positions.

Aspect 30. The apparatus of any of aspects 26 to 29, wherein the one or more processors are configured to combine the license plate number with the second license plate number at least in part by substituting one or more first characters in the license plate number identified as obstructed with one or more second characters in the second license plate number.

Aspect 31. The apparatus of any of aspects 26 to 30, wherein the one or more processors are configured to query the license plate database for stored license plate numbers that at least partially match the license plate number read from the license plate.

Aspect 32. The apparatus of any of aspects 26 to 31, wherein the one or more processors are configured to generate a list of possible license plate numbers from the license plate number read from the license plate, and query the license plate database for stored license plate numbers based on the list of possible license plate numbers.

Aspect 33. A computer-readable medium storing instructions for resolving license plate numbers read by a license plate recognition (LPR) sensor, wherein the instructions are executable by a processor for:
receiving, from a license plate recognition (LPR) sensor, a first indication of a license plate number read of a license plate on a first side of a vehicle and a second indication that at least a portion of the license plate is obstructed;
based on the second indication, generating a corrected license plate number by at least one of:
   combining the license plate number with a second license plate number read, by a second LPR sensor, from a second side of the vehicle; or
   obtaining a stored license plate number from a license plate database at least in part by querying the license plate database based on the license plate number read from the license plate, and determining the stored license plate number associated with a vehicle having one or more stored physical properties matching one or more physical properties of the vehicle obtained by the LPR sensor; and
   providing an output of the corrected license plate number.

Aspect 34. The computer-readable medium of aspect 33, wherein the second indication includes a special character in one or more character positions of the license plate number indicating that the license plate is obstructed at the one or more character positions.

The functions described herein may be implemented in hardware, software executed by a processor, firmware, or any combination thereof. If implemented in software executed by a processor, the functions may be stored on or transmitted over as one or more instructions or code on a non-transitory computer-readable medium. Other examples and implementations are within the scope and spirit of the disclosure and appended claims. For example, due to the nature of software, functions described above can be implemented using software executed by a specially programmed processor, hardware, firmware, hardwiring, or combinations of any of these. Features implementing functions may also be physically located at various positions, including being distributed such that portions of functions are implemented at different physical locations.

Computer-readable media includes both computer storage media and communication media including any medium that facilitates transfer of a computer program from one place to another. A storage medium may be any available medium that can be accessed by a general purpose or special purpose computer. By way of example, and not limitation, computer-readable media can comprise RAM, ROM, EEPROM, CD-ROM or other optical disk storage, magnetic disk storage or other magnetic storage devices, or any other medium that can be used to carry or store desired program code means in the form of instructions or data structures and that can be accessed by a general-purpose or special-purpose computer, or a general-purpose or special-purpose processor. Also, any connection is properly termed a computer-readable medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. Disk and disc, as used herein, include compact disc (CD), laser disc, optical disc, digital versatile disc (DVD), floppy disk and Blu-ray disc where disks usually reproduce data magnetically, while discs reproduce data optically with lasers. Combinations of the above are also included within the scope of computer-readable media.

The previous description is provided to enable any person skilled in the art to practice the various aspects described herein. Various modifications to these aspects will be readily apparent to those skilled in the art, and the generic principles defined herein may be applied to other aspects. Thus, the claims are not intended to be limited to the aspects shown herein, but is to be accorded the full scope consistent with the language claims, wherein reference to an element in the singular is not intended to mean "one and only one" unless specifically so stated, but rather "one or more." The word "exemplary" is used herein to mean "serving as an example, instance, or illustration." Any aspect described herein as "exemplary" is not necessarily to be construed as preferred or advantageous over other aspects. Unless specifically stated otherwise, the term "some" refers to one or more. Combinations such as "at least one of A, B, or C," "one or more of A, B, or C," "at least one of A, B, and C," "one or more of A, B, and C," and "A, B, C, or any combination thereof" include any combination of A, B, and/or C, and may include multiples of A, multiples of B, or multiples of C. Specifically, combinations such as "at least one of A, B, or C," "one or more of A, B, or C," "at least one of A, B, and C," "one or more of A, B, and C," and "A, B, C, or any combination thereof" may be A only, B only, C only, A and B, A and C, B and C, or A and B and C, where any such combinations may contain one or more member or members of A, B, or C. All structural and functional equivalents to the elements of the various aspects described throughout this disclosure that are known or later come to be known to those of ordinary skill in the art are expressly incorporated herein by reference and are intended to be encompassed by the claims. Moreover, nothing disclosed herein is intended to be dedicated to the public regardless of whether such disclosure is explicitly recited in the claims. The words "module," "mechanism," "element," "device," and the like may not be a substitute for the word "means." As such, no claim element is to be construed as a means plus function unless the element is expressly recited using the phrase "means for."

As used herein, a processor, at least one processor, and/or one or more processors, individually or in combination, configured to perform or operable for performing a plurality of actions is meant to include at least two different processors able to perform different, overlapping or non-overlapping subsets of the plurality actions, or a single processor able to perform all of the plurality of actions. In one non-limiting example of multiple processors being able to perform different ones of the plurality of actions in combination, a description of a processor, at least one processor, and/or one or more processors configured or operable to perform actions X, Y, and Z may include at least a first processor configured or operable to perform a first subset of X, Y, and Z (e.g., to perform X) and at least a second processor configured or operable to perform a second subset of X, Y, and Z (e.g., to perform Y and Z). Alternatively, a first processor, a second processor, and a third processor may be respectively configured or operable to perform a respective one of actions X, Y, and Z. It should be understood that any combination of one or more processors each may be configured or operable to perform any one or any combination of a plurality of actions.

As used herein, a memory, at least one memory, and/or one or more memories, individually or in combination, configured to store or having stored thereon instructions executable by one or more processors for performing a plurality of actions is meant to include at least two different memories able to store different, overlapping or non-overlapping subsets of the instructions for performing different, overlapping or non-overlapping subsets of the plurality actions, or a single memory able to store the instructions for performing all of the plurality of actions. In one non-limiting example of one or more memories, individually or in combination, being able to store different subsets of the instructions for performing different ones of the plurality of actions, a description of a memory, at least one memory, and/or one or more memories configured or operable to store or having stored thereon instructions for performing actions X, Y, and Z may include at least a first memory configured or operable to store or having stored thereon a first subset of instructions for performing a first subset of X, Y, and Z (e.g., instructions to perform X) and at least a second memory configured or operable to store or having stored thereon a second subset of instructions for performing a second subset of X, Y, and Z (e.g., instructions to perform Y and Z). Alternatively, a first memory, and second memory, and a third memory may be respectively configured to store or have stored thereon a respective one of a first subset of instructions for performing X, a second subset of instruction for performing Y, and a third subset of instructions for performing Z. It should be understood that any combination of one or more memories each may be configured or operable to store or have stored thereon any one or any combination of instructions executable by one or more processors to perform any one or any combination of a plurality of actions. Moreover, one or more processors may each be coupled to at least one of the one or more memories and configured or operable to execute the instructions to perform the plurality of actions. For instance, in the above non-limiting example of the different subset of instructions for performing actions X, Y, and Z, a first processor may be coupled to a first memory storing instructions for performing action X, and at least a second processor may be coupled to at least a second memory storing instructions for performing actions Y and Z, and the first processor and the second processor may, in combination, execute the respective subset of instructions to accomplish performing actions X, Y, and Z. Alternatively, three processors may access one of three different memories each storing one of instructions for performing X, Y, or Z, and the three processor may in combination execute the respective subset of instruction to accomplish performing actions X, Y, and Z. Alternatively, a single processor may execute the instructions stored on a single memory, or distributed across multiple memories, to accomplish performing actions X, Y, and Z.

## Claims

1. A computer-implemented method for resolving license plate numbers read by a license plate recognition (LPR) sensor, comprising:
receiving a first indication of a license plate number read of a license plate on a first side of a vehicle and a second indication that at least a portion of the license plate is obstructed;
based on the second indication, generating a corrected license plate number by at least one of:
combining the license plate number with a second license plate number read from a second side of the vehicle; or
obtaining a stored license plate number from a license plate database at least in part by querying the license plate database based on the license plate number read from the license plate, and determining the stored license plate number associated with a registered vehicle having one or more stored physical properties matching one or more physical properties of the vehicle; and
providing an output of the corrected license plate number.

2. The computer-implemented method of claim 1, wherein the second indication includes a special character in one or more character positions of the license plate number indicating that the license plate is obstructed at the one or more character positions.

3. The computer-implemented method of claim 2, wherein combining the license plate number with the second license plate number includes substituting the one or more character positions with one or more second characters in corresponding character positions of the second license plate number; or
wherein querying the license plate database includes querying the license plate database for stored license plate numbers having any character in the one or more character positions.

4. The computer-implemented method of any of claims 1 to 3, wherein combining the license plate number with the second license plate number includes substituting one or more first characters in the license plate number identified as obstructed with one or more second characters in the second license plate number.

5. The computer-implemented method of any of claims 1 to 4, wherein querying the license plate database includes querying the license plate database for stored license plate numbers that at least partially match the license plate number read from the license plate.

6. The computer-implemented method of any of claims 1 to 5, further comprising generating a list of possible license plate numbers from the license plate number read from the license plate, wherein querying the license plate database includes querying the license plate database for stored license plate numbers based on the list of possible license plate numbers.

7. The computer-implemented method of any of claims 1 to 6, further comprising determining the one or more physical properties of the vehicle as one or more of a color of the vehicle, a make of the vehicle, or a model of the vehicle.

8. The computer-implemented method of any of claims 1 to 7, further comprising detecting a region associated with the license plate of the vehicle, wherein querying the license plate database is further based on the region; or
further comprising detecting that the portion of the license plate is obstructed based on a spacing between recognized characters on the license plate; or
wherein the second license plate number is read by a second LPR sensor.

9. An apparatus for resolving license plate numbers, comprising:
one or more memories; and
one or more processors communicatively coupled with the one or more memories and configured to:
receive, from a license plate recognition (LPR) sensor, a first indication of a license plate number read of a license plate on a first side of a vehicle and a second indication that at least a portion of the license plate is obstructed;
based on the second indication, generating a corrected license plate number by at least one of:
combine the license plate number with a second license plate number read, by a second LPR sensor, from a second side of the vehicle; or
obtain a stored license plate number from a license plate database at least in part by querying the license plate database based on the license plate number read from the license plate, and determining the stored license plate number associated with a vehicle having one or more stored physical properties matching one or more physical properties of the vehicle obtained by the LPR sensor; and
provide an output of the corrected license plate number.

10. The apparatus of claim 9, wherein the second indication includes a special character in one or more character positions of the license plate number indicating that the license plate is obstructed at the one or more character positions.

11. The apparatus of claim 10, wherein the one or more processors are configured to combine the license plate number with the second license plate number at least in part by substituting the one or more character positions with one or more second characters in corresponding character positions of the second license plate number; or
wherein the one or more processors are configured to query the license plate database for stored license plate numbers having any character in the one or more character positions.

12. The apparatus of any of claims 9 to 11, wherein the one or more processors are configured to combine the license plate number with the second license plate number at least in part by substituting one or more first characters in the license plate number identified as obstructed with one or more second characters in the second license plate number.

13. The apparatus of any of claims 9 to 12, wherein the one or more processors are configured to query the license plate database for stored license plate numbers that at least partially match the license plate number read from the license plate; or
wherein the one or more processors are configured to generate a list of possible license plate numbers from the license plate number read from the license plate, and query the license plate database for stored license plate numbers based on the list of possible license plate numbers.

14. A computer-readable medium storing instructions for resolving license plate numbers read by a license plate recognition (LPR) sensor, wherein the instructions are executable by a processor for:
receiving, from a license plate recognition (LPR) sensor, a first indication of a license plate number read of a license plate on a first side of a vehicle and a second indication that at least a portion of the license plate is obstructed;
based on the second indication, generating a corrected license plate number by at least one of:
combining the license plate number with a second license plate number read, by a second LPR sensor, from a second side of the vehicle; or
obtaining a stored license plate number from a license plate database at least in part by querying the license plate database based on the license plate number read from the license plate, and determining the stored license plate number associated with a vehicle having one or more stored physical properties matching one or more physical properties of the vehicle obtained by the LPR sensor; and
providing an output of the corrected license plate number.

15. The computer-readable medium of claim 14, wherein the second indication includes a special character in one or more character positions of the license plate number indicating that the license plate is obstructed at the one or more character positions.
